# EUROPEAN PATENT SPECIFICATION

(11) **EP 0 533 319 B1**
(45) Date of publication and mention of the grant of the patent: **21.06.1995**
(21) Application number: 92306324.2
(22) Date of filing: 09.07.1992
(51) Int. Cl.: F04D 29/32

(54) **Aerofoil members for gas turbine engines**
Tragflügelprofile für Gasturbinenmotoren
Profils aérodynamiques pour moteurs à turbine à gaz

(30) Priority: 17.09.1991 GB 9119846
(43) Date of publication of application: 24.03.1993
(73) Proprietor: ROLLS-ROYCE plc, London, SW1E 6AT (GB)
(72) Inventor: Martin, Terence Edward, Belper, Derbyshire DE5 1GH (GB); Lung, Hang Wai, Sinfin, Derby (GB)
(74) Representative: Gunn, Michael Alan

(56) References cited:
- EP-A- 0 441 097
- CH-A- 223 833
- DE-A- 3 640 780
- GB-A- 606 560
- US-A- 4 861 228

## Description

The present invention relates to aerofoil members of the type which are commonly used in gas turbine engines. These members include the rotor blades and stator vanes of an axial flow compressor in a gas turbine engine.

In a gas turbine engine compression of the air is effected by an axial flow compressor. The axial flow compressor is a multi-stage unit employing alternate rows of rotating (rotor) blades and stationary (stator) vanes. The function of the rotor blades and stator vanes is to accelerate and diffuse the air until the required pressure rise is obtained.

As disclosed for example in document EP 441097, the rotor blades and stator vanes are arranged in rows which are circumferentially disposed. Each row of rotor blades directs the air passing therethrough from the immediately upstream row of stator vanes to the immediately downstream row of stator vanes. Each row of stator vanes redirects the air at an angle to the next row of rotor blades. The preferred angle of entry of the air into each row of rotor blades depends on the speed of rotation and the velocity vector of the air approaching each row.

To optimise the air flow distribution within the axial flow compressor the rotor blades and stator vanes are designed so that the airflow enters each row at a preferred angle. They are designed so that the angle at which the airflow is incident at the leading edge of the rotor blades or stator vanes is such that the airflow does not have to turn abruptly. At the correct angle the airflow turns smoothly attaching to the surfaces of the rotor blades and stator vanes. This minimises the aerodynamic losses and enables the axial flow compressor to work efficiently.

The angle of the airflow for each row has traditionally been set by experience using correlations derived from experimental test data. The experimental test data is used to set the angle, at a nominal mid-height position on the leading edge of the rotor blades or stator vanes. The angle of the airflow at the mid-height position is set to minimise the aerodynamic losses. Since the angle at which the airflow is incident at the leading edge is only set at the mid-height position aerodynamic losses are experienced at other positions along the leading edge of the rotor blades or stator vanes radially above and below the mid-height position.

The present invention seeks to provide rotor blades or stator vanes, for use in an axial flow compressor of a gas turbine engine, in which the angle at which the airflow is incident at the leading edge is set at a number of positions along the leading edge of each of the rotor blades or stator vanes. The aerodynamic profile of the leading edge of the rotor blades or stator vanes also improves the axial efficiency of the axial flow compressor.

According to the present invention an aerofoil for use in an axial flow compressor of a gas turbine engine, the aerofoil having an aerodynamic profile defined by a plurality of nominal sections stacked in a plane normal to a longitudinal axis of the engine, each section having a pressure surface and a suction surface and being arranged so that in operation a proportion of a flow of air passing through the engine is incident on an arc of a circle at the leading edge of each section characterised in that the nominal sections are stacked to define an aerofoil which has a leading edge profile such that at a predetermined engine operating speed the proportion of the flow of air which is incident on the leading edge circles of each section is incident at an angle at which the airflow divides so that the maximum velocity of the airflow at the leading edge circle which subsequently flows over the pressure surface of each section is equal to the maximum velocity of the airflow at the leading edge circle which subsequently flows over the suction surface of each section.

The pressure surface of each section defining the aerofoil is concave and the suction surface of each section defining the aerofoil is convex.

The aerofoil may be a blade or a vane, the vane may be variable.

Preferably a plurality of aerofoils are arranged in a circumferential array to define a stage of an axial flow compressor.

The present invention will now be described with reference to the accompanying drawings in which:
Figure 1 is a schematic view of a gas turbine engine which is partially broken away to show a cross-sectional view of part of an axial flow compressor.
Figure 2 is a pictorial view of a compressor rotor blade showing a number of radial sections.
Figure 3 is a cross-sectional view of one of the radial sections of the blade shown in figure 2 in which the air incident on the leading edge has a high positive incidence.
Figure 4 is a plot of the velocity distribution of the air around the radial section of the blade shown in figure 3.
Figure 5 is a cross-sectional view of one of the radial sections of the blade shown in figure 2 in which the air incident on the leading edge has a high negative incidence.
Figure 6 is a plot of the velocity distribution of the air around the radial section of the blade shown in figure 5.
Figure 7 is a cross-sectional view of one of the radial sections of the blade shown in figure 2 in which the air incident on the leading edge is at the optimum angle of incidence.
Figure 8 is a plot of the velocity distribution of the air around the radial section of the blade shown in figure 7.

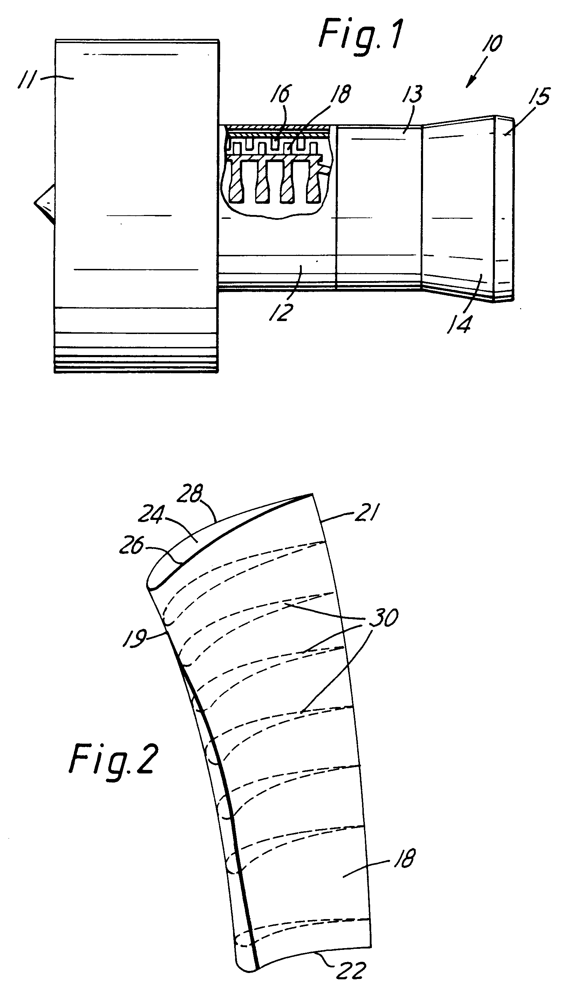

Referring to figure 1 a gas turbine engine generally indicated at 10 comprises a ducted fan 11, a compressor 12, combustion equipment 13 and a turbine 14 in axial flow series. The engine operates in a conventional manner so that the air is compressed by the fan 11 and compressor 12 before being mixed with fuel and the mixture combusted in the combustion equipment 13. The combustion products then expand through the turbine 14, which drive the fan 11 and the compressor 12, before being exhausted through a propulsion nozzle 15.

The compressor 12 has alternate rows of stationary (stator) vanes 16 and rotating (rotor) blades 18. The pressure of the airflow is raised as it passes through the series of alternating rows of stator vanes 16 and rotor blades 18. The air discharges from each row of rotor blades 18 to a row of stator vanes 16 further downstream. The stator vanes 16 redirect the airflow to a preferred angle for entering the succeeding row of blades 18.

The preferred angle at which the airflow should enter the blade rows varies axially along the length of the compressor 12 as well as radially along leading edge 19, figure 2, of each of the blades 18 in the row. To ensure that the air is incident at the correct angle along the leading edge 19 of the blades each blade 18 is twisted from root 22 to tip 24. The amount of twist required depends on the speed of rotation of the blade and the velocity vector of the air approaching the leading edge 19.

Each blade 18 should be designed so that the angle at which the airflow is incident on the leading edge 19 of the blade 18 is such that the air does not turn abruptly around the leading edge 19. When the air is incident at the leading edge 19 of the blade 18 at the optimum angle the airflow turns smoothly attaching to a concave pressure surface 26 and a convex suction surface 28 of the blade 18. This minimises any aerodynamic losses and enables the blade 18 to work efficiently.

To design the blades 18 so that the airflow is incident at the correct angle radially along the leading edge 19, each blade 18 is divided into a number of nominal radial sections 30, figure 2. A nominal circle 20 is fitted to the leading edge 19 of each of the sections 30 of the blade 18.

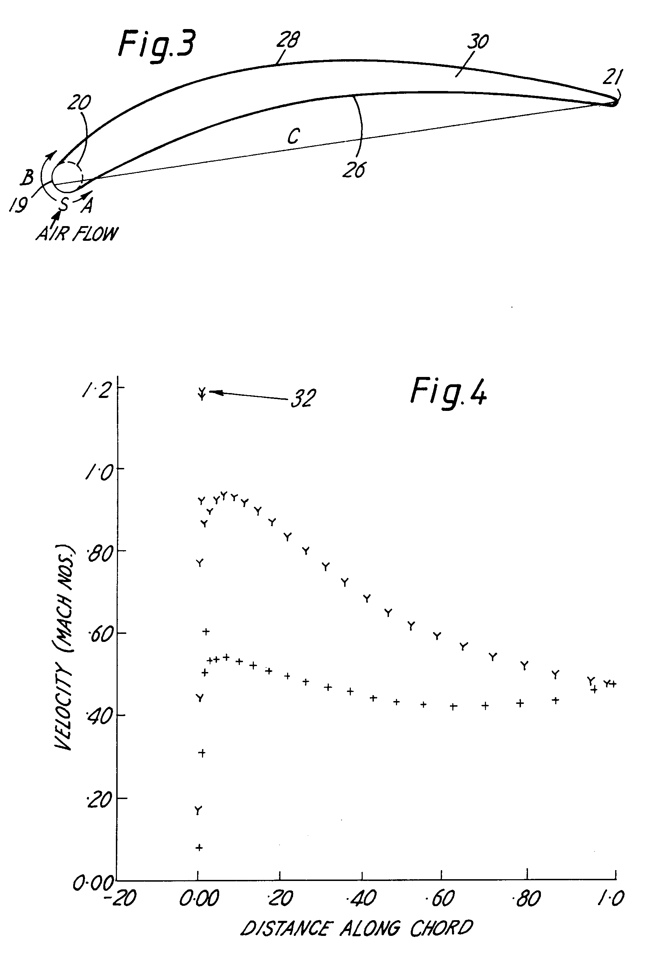

Figure 3 shows a cross-sectional view of one of the radial sections 30 of the blade 18. The air is incident at the leading edge 19 on the concave pressure surface side 26 of the blade and is said to have a high positive incidence.

As the air impinges on the leading edge 19 of the radial section 30 it loses its momentum and a stagnation point S forms. The airflow then divides so that part flows in the direction of arrow A around the circle 20 at the leading edge 19 to the pressure surface 26 and the remainder flows in the direction of arrow B around the circle 20 at the leading edge 19 to the suction surface 26.

The velocity of the airflow travelling in the direction of arrow A to the pressure surface 26 is plotted against the distance along a reference line C, the chord. The chord C extends from the centre of curvature of the leading edge 19 to the centre of curvature of the trailing edge 21. The distance along the reference line C is expressed as a fraction of the total chord length. The velocity distribution of the airflow travelling in the direction of arrow A across the pressure surface 26 is indicated by the + points in figure 4. Similarly the velocity of the airflow travelling in the direction of arrow B across the suction surface 28 is plotted against the distance along the chord C. The velocity distribution around the suction surface 28 is indicated by the Y points in figure 4.

The velocity of the airflow builds up quickly in both directions as the air leaves the stagnation point S. The airflow has to travel further around the leading edge circle 20 to reach the suction surface 28 than it does to reach the pressure surface 26. The airflow passing from the leading edge 19 to the suction surface 28 of the blade 18 attains a higher velocity than that passing to the pressure surface 26. This results in a spike 32 in the velocity distribution of the air flowing in the direction of arrow B, indicated by the Y points in figure 4, from the leading edge 19 to the suction surface 28.

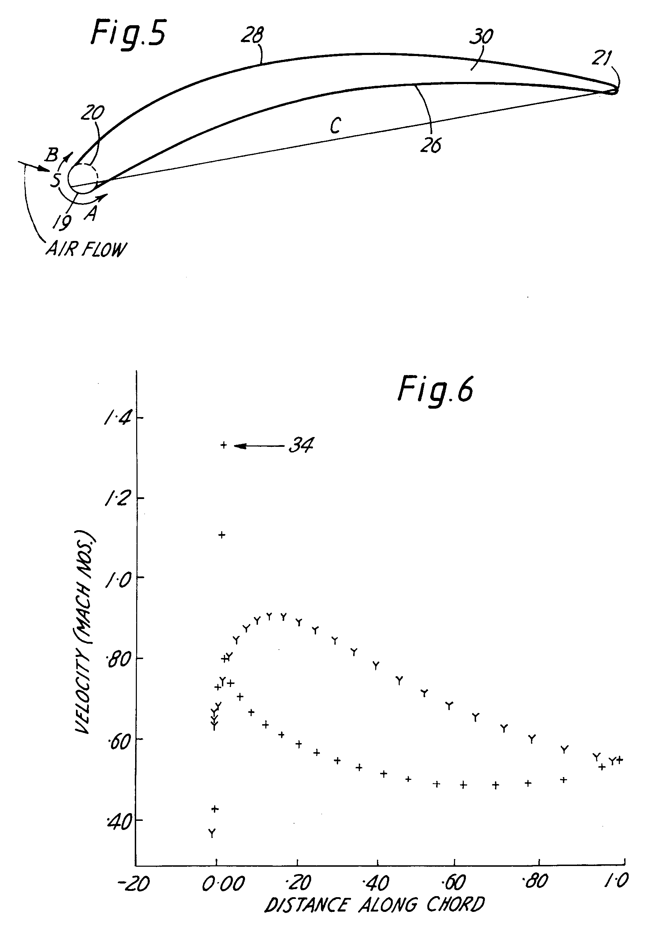

When the airflow is incident at the leading edge 19 on the convex suction surface side 28 of the blade, figure 5, the air is said to have a high negative incidence. The airflow has to travel further around the circle 20 at the leading edge 19 to reach the pressure surface 26 than it does to reach the suction surface 28. The airflow at the leading edge 19 therefore attains a higher velocity as it passes to the pressure surface 26 of the blade 18. This results in a spike 34 in the velocity distribution of the air flowing in the direction of arrow A from the leading edge 19 to the the pressure surface 28. The velocity distribution of the air flowing in the direction of arrow A from the leading edge 19 to the pressure surface 28 is indicated by the + points in figure 6.

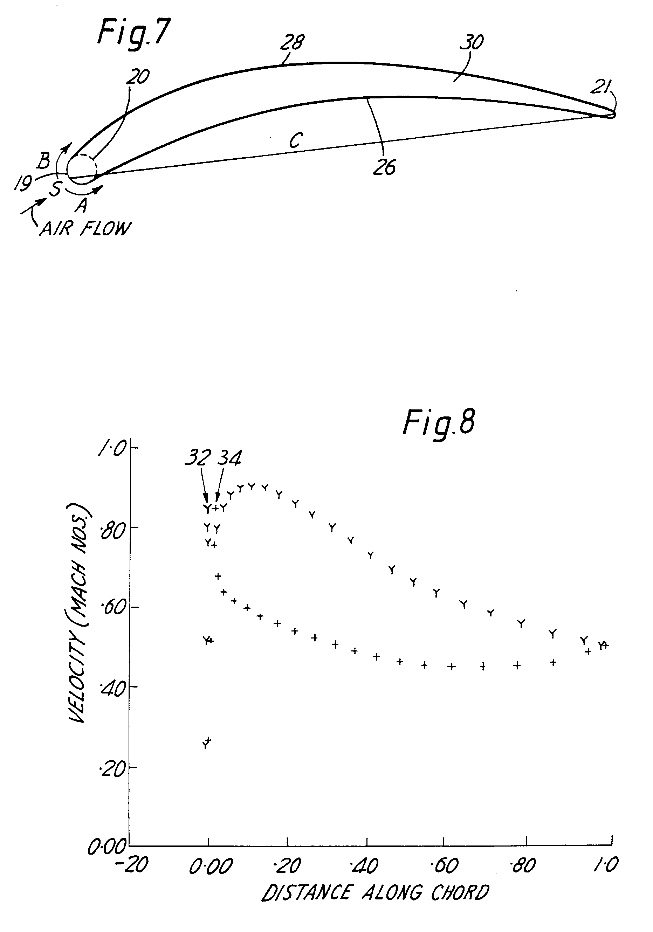

The angle at which the airflow is incident on the leading edge 19 of each section 30 of the blade 18 is changed until the airflow has to travel the same distance around the circle 20 at the leading edge 19 to reach the pressure surface 26 and the suction surface 28, figure 7. Spikes occur in the velocity distributions of the airflow passing from the leading edge 19 to both the pressure surface 26 and the suction surface 28, figure 8. The spikes 32 and 34 at the leading edge 19 of both velocity distributions are of equal height. This is because the airflow passing around the leading edge 19 travels the same distance around the circle 20 in both directions. The airflow passing from the leading edge 19 in the direction of arrow A therefore attains the same velocity as the airflow passing from the leading edge 19 in the direction of arrow B to the suction surface 28. The air turns smoothly attaching to the pressure surface 26 and the suction surface 28 minimising any aerodynamic losses.

The angle of incidence of the airflow is changed for each radial section 30 of the blade 18 until the spikes 32 and 34 in the velocity distributions at the leading edge 19 are of equal heights. In this way the angle at which the airflow is incident on the leading edge 19 can be set for each radial section 30 of the blade 18 to minimise any aerodynamic losses.

Once the optimum angle at which the airflow is incident on the leading edge 19 has been found for each radial section 30 of the blade 18 the sections are stacked 30 in a plane normal to the longitudinal axis of the engine 10. The stacked section 30 define a blade 18 having a leading edge 19 the aerodynamic profile of which is such that the airflow is incident at the optimum angle along the leading edge 19. The airflow is incident at the leading edge 19 at the optimum angle from the root 20 to the tip 22 of the blades 18 and improves the operating efficiency of the compressor.

The velocity distribution, figure 8, with its associated spikes 32 and 34 provides a visual indication of incidence. This can be used to set up the incidence required at the leading edge 19 of the blade 18 for different engine operating conditions within acceptable safety margins.

Although the present invention has been described with reference to a rotor blade it will be appreciated by one skilled in the art that it is equally applicable to the stator vanes of an axial flow compressor. This technique may also be used to set variable stators, as described in US 4861228, at their nominal positions.

## Claims

1. An aerofoil for use in an axial flow compressor (12) of a gas turbine engine (10), the aerofoil having an aerodynamic profile defined by a plurality of nominal sections (30) stacked in a plane normal to a longitudinal axis of the engine (10), each section (30) having a pressure surface (26) and a suction surface (28) and being arranged so that in operation a proportion of a flow of air passing through the engine (10) is incident on an arc of a circle (20) at the leading edge (19) of each section (30), characterised in that the nominal sections (30), are stacked to define an aerofoil which has a leading edge profile (19) such that at a predetermined engine operating speed the proportion of the flow of air which is incident on the leading edge circles (20) of each section (30) is incident at an angle at which the airflow divides so that the maximum velocity of the airflow at the leading edge circle (20) which subsequently flows over the pressure surface (26) of each section (30) is equal to the maximum velocity of the airflow at the leading edge circle (20) which subsequently flows over the suction surface (28) of each section (30).

2. An aerofoil as claimed in claim 1 characterised in that the pressure surface (26) of each nominal section (30) of the aerofoil is concave and the suction surface (28) of each nominal section (30) of the aerofoil is convex.

3. An aerofoil as claimed in claim 1 or claim 2 characterised in that the aerofoil is a blade (18).

4. An aerofoil as claimed in claim 1 or claim 2 characterised in that the aerofoil is a vane (16).

5. An aerofoil as claimed in claim 4 characterised in that the vane (16) is variable.

6. A gas turbine engine including a plurality of aerofoils as claimed in any of the preceding claims, characterised in that the aerofoils are arranged in a circumferential array to define a stage of an axial flow compressor (12).

## Patentansprüche

1. Stromlinienprofil zur Verwendung in einem Axialströmungskompressor (12) eines Gasturbinentriebwerks (10), wobei das Stromlinienprofil durch mehrere nominelle Abschnitte (30) definiert wird, die in einer Ebene normal zur Längsachse des Triebwerks (10) gestaffelt sind, und wobei jeder Abschnitt (30) eine Druckfläche (26) und eine Saugfläche (28) besitzt und so angeordnet ist, daß im Betrieb ein Teil der das Triebwerk (10) durchströmenden Luft auf einem Kreisbogen (20) an der Vorderkante (19) eines jeden Abschnitts (30) auftrifft,
dadurch gekennzeichnet, daß die nominellen Abschnitte (30) so gestapelt sind, daß sie ein Stromlinienprofil definieren, dessen Vorderkantenprofil (19) derart ausgebildet ist, daß bei einer vorbestimmten Triebwerksdrehzahl der Anteil der Luftströmung, der auf den Vorderkantenkreis (20) eines jeden Abschnitts (30) auftrifft, unter einem solchen Winkel auftrifft, daß sich die Luftströmung derart aufteilt, daß die maximale Geschwindigkeit der Luftströmung am Vorderkantenkreis (20), die danach über die Druckseite (26) jedes Abschnitts (30) abfließt, gleich ist der maximalen Geschwindigkeit der Luftströmung am Vorderkantenkreis (20), die danach über die Saugseite (28) jedes Abschnitts (30) abfließt.

2. Stromlinienprofil nach Anspruch 1,
dadurch gekennzeichnet, daß die Druckfläche (26) jedes nominellen Abschnitts (30) des Stromlinienprofils konkav ist, und daß die Saugseite (28) jedes nominellen Abschnitts (30) des Stromlinienprofils konvex ist.

3. Stromlinienprofil nach Anspruch 1 oder 2,
dadurch gekennzeichnet, daß das Stromlinienprofil eine Rotorschaufel (18) ist.

4. Stromlinienprofil nach den Ansprüchen 1 oder 2,
dadurch gekennzeichnet, daß das Stromlinienprofil eine Leitschaufel (16) ist.

5. Stromlinienprofil nach Anspruch 4,
dadurch gekennzeichnet, daß die Leitschaufel (16) einstellbar ist.

6. Gasturbinentriebwerk mit mehreren Stromlinienprofilen nach einem der vorhergehenden Ansprüche,
dadurch gekennzeichnet, daß die Stromlinienprofile in Umfangsrichtung zueinander angeordnet sind, um eine Stufe eines Axialströmungskompressors (12) zu definieren.

## Revendications

1. Portante destinée à être utilisée dans un compresseur axial (12) d'un moteur à turbine à gaz (10), la portante ayant un profil aérodynamique définie par une pluralité de sections nominales (30) empilées dans un plan perpendiculaire à un axe longitudinal du moteur (10), chaque section (30) ayant une surface de pression (26) et une surface d'aspiration (28) et étant arrangée de telle sorte qu'en fonctionnement une proportion d'un écoulement d'air passant à travers le moteur (10) est incident sur un arc d'un cercle (20) au bord d'attaque (19) de chaque section (30), caractérisée en ce que les sections nominales (30) sont empilées pour définir une portante qui a un profil de bord d'attaque (19) de telle sorte qu'à une vitesse de fonctionnement du moteur prédéterminée, la proportion de l'écoulement d'air qui est incident sur les cercles (20) de bord d'attaque de chaque section (30) est incident avec un angle auquel l'écoulement d'air se divise de telle sorte que la vitesse maximum de l'écoulement d'air au cercle (20) de bord d'attaque qui s'écoule ensuite sur la surface de pression (26) de chaque section (30) est égale à la vitesse maximum de l'écoulement d'air au cercle (20) de bord d'attaque qui s'écoule ensuite sur la surface d'aspiration (28) de chaque section (30).

2. Portante selon la revendication 1, caractérisée en ce que la surface de pression (26) de chaque section nominale (30) de la portante est concave et la surface d'aspiration (28) de chaque section nominale (30) de la portante est convexe.

3. Portante selon la revendication 1 ou la revendication 2, caractérisée en ce que la portante est un aubage (18).

4. Portante selon la revendication 1 ou la revendication 2, caractérisée en ce que la portante est une aube fixe (16).

5. Portante selon la revendication 4, caractérisée en ce que l'aube fixe (16) est variable.

6. Moteur à turbine à gaz comprenant une pluralité de portantes selon l'une quelconque des revendications précédentes, caractérisée en ce les portante sont disposées selon un arrangement circonférentiel pour définir un étage d'un compresseur axial (12).
